# DEMANDE DE BREVET EUROPEEN

(11) **EP 1 748 199 A1**
(43) Date de publication de la demande: **31.01.2007**
(21) Numéro de dépôt: 06291132.6
(22) Date de dépôt: 10.07.2006
(51) Int. Cl.: F16B 39/04, B60J 5/04, B60R 13/04

(54) **Elément de garnissage destiné à être monté sur une véhicule automobile et procédé de montage associé.**

(30) Priorité: 29.07.2005 FR 0508173
(71) Demandeur: Faurecia Interieur Industrie, 92000 Nanterre (FR)
(72) Inventeur: Sangani, Patrick, c/o Faurecia Interieur Industrie, 60114 Meru (FR)
(74) Mandataire: Domenego, Bertrand

(57) **Abrégé**

Cet élément (25) comprend un corps (37) thermoplastique délimitant au moins un alésage (39) de passage d'une vis de fixation (43), et des moyens (41, 43, 45, 49) de fixation du corps (37) sur la pièce (11), comprenant une vis de fixation (43) engagée dans l'alésage (39). La vis (43) est déplaçable dans l'alésage (39) lors du montage de l'élément (25) sur la pièce (11) pour être vissée dans la pièce (11). Les moyens de fixation comprennent une entretoise de renfort (41) métallique fixée sur le corps (37) dans l'alésage (39) et, au moins avant le montage, un organe (45) de blocage en position de la vis (43) par rapport au corps (37), interposé entre la vis (43) et l'entretoise de renfort (41). L'organe de blocage (45) est déformable lors du montage pour libérer la vis (43) par rapport au corps (37).

Application à la réalisation de panneaux de portes pour véhicules automobiles.

## Description

La présente invention concerne un élément de garnissage selon le préambule de la revendication 1.

On connaît un élément de garnissage du type précité, qui comprend un corps thermoplastique destiné à être monté sur une porte de véhicule automobile.

Pour faciliter le montage de l'élément de garnissage sur la porte, il est connu de prémonter la vis directement dans le corps thermoplastique, avant son montage sur la porte, afin de diminuer le nombre de pièces à référencer par le constructeur automobile, et pour limiter le nombre d'opérations à réaliser lors du montage final de la porte sur la chaîne d'assemblage. Un élément de garnissage qui porte ses vis d'assemblage à l'armature de la porte est donc fourni au constructeur.

Toutefois, lorsque le corps est réalisé à base d'un matériau thermoplastique relativement souple ou relativement fin au voisinage de l'alésage de passage de la vis de fixation, il est connu d'insérer une entretoise métallique de renfort entre le corps et la vis. L'entretoise renforce ainsi mécaniquement le corps et évite son flambage lors du vissage.

Dans ce cas, le prémaintien de la vis de fixation sur l'élément de garnissage est difficile à réaliser sans dégrader la vis.

Un but de l'invention est donc d'obtenir un élément de garnissage destiné à être monté sur une pièce d'équipement de véhicule automobile, l'élément comprenant une vis de fixation préassemblée de manière simple et efficace dans un alésage muni d'une entretoise métallique.

A cet effet, l'invention a pour objet un élément de garnissage selon la revendication 1.

L'élément de garnissage selon l'invention peut comprendre l'une ou plusieurs des caractéristiques qui font l'objet des revendications 2 à 5, prise(s) isolément, ou suivant toutes combinaisons techniquement possibles.

L'invention a en outre pour objet une pièce d'équipement de véhicule automobile selon la revendication 6.

L'invention a également pour objet un procédé de montage selon la revendication 7.

L'invention sera mieux comprise à la lecture de la description qui va suivre, donnée uniquement à titre d'exemple, et faite en se référant aux dessins annexés sur lesquels :
- la Figure 1 est une vue partielle, en coupe transversale, d'une porte de véhicule automobile, sur laquelle est fixée un corps de poignée selon l'invention ;
- la Figure 2 est une vue d'un détail du corps de poignée de la Figure 1, avant son montage sur la porte de la Figure 1.

Dans tout ce qui suit, les orientations sont les orientations habituelles d'un véhicule automobile. Par suite, les termes « transversal », « longitudinal », « supérieur », « inférieur », « intérieur », « extérieur » s'entendent par rapport au sens normal de conduite du véhicule et par rapport à la position d'un conducteur.

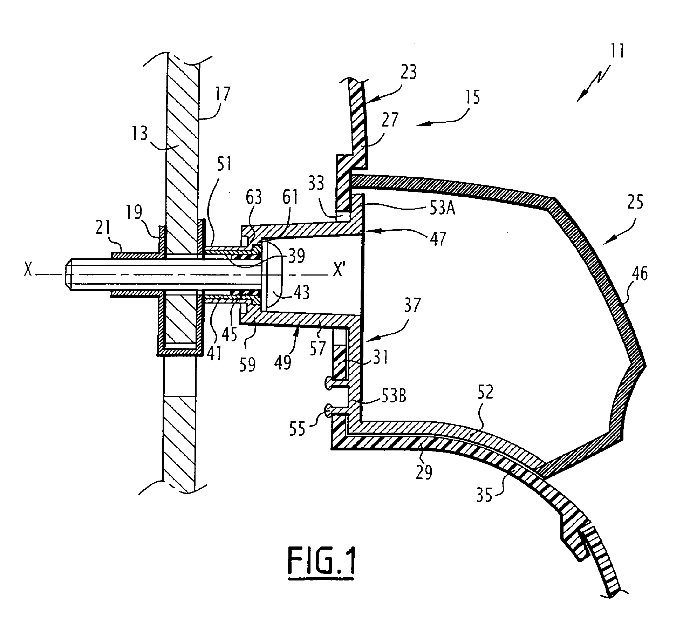

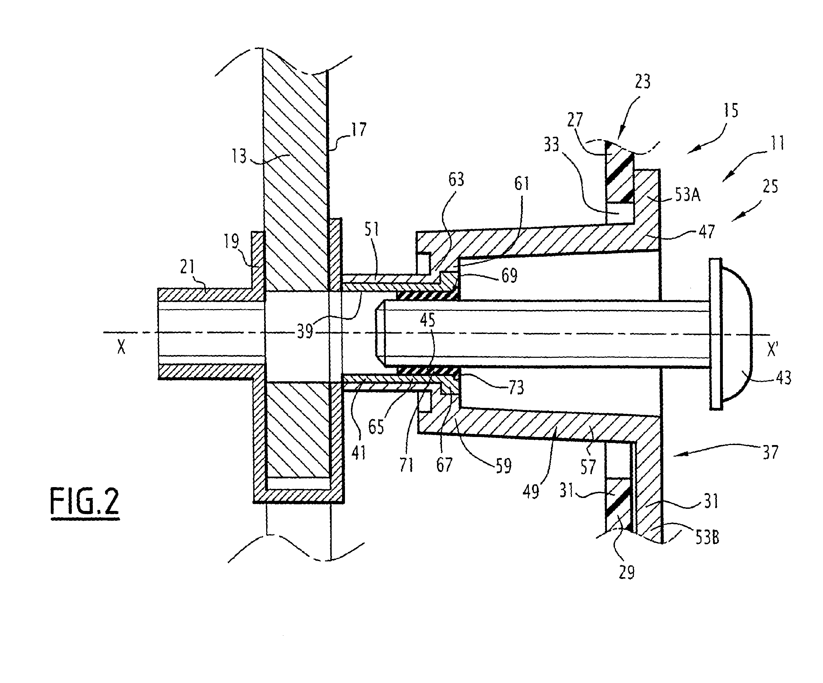

Les Figures 1 et 2 représentent les parties pertinentes d'une porte 11 de véhicule automobile selon l'invention. La porte 11 comprend une armature 13 métallique et un panneau de porte 15 vissé sur une face intérieure 17 de l'armature 13.

L'armature 13 comprend un panneau de tôle sensiblement vertical qui comprend un écrou de vissage 19 présentant un fût central 21 de vissage d'axe X-X' horizontal, qui fait saillie extérieurement par rapport au panneau de tôle.

Le panneau 15 comprend un élément porteur 23 et un élément de garnissage 25 formant par exemple un corps de poignée de porte.

L'élément porteur 23 est fixé sur l'armature 13 par des moyens de fixation non représentés. Il comprend une paroi supérieure 27 sensiblement verticale et une paroi inférieure 29 d'appui de l'élément de garnissage 25.

La paroi inférieure 29 comprend une région verticale 31 qui délimite avec la paroi supérieure 27, un passage 33 de vissage de l'élément de garnissage 25 dans l'armature 13. Le passage 33 s'étend en regard de l'écrou 19.

La paroi 19 comprend en outre une région galbée 35 de support de l'élément de garnissage 25

Comme illustré par les Figures 1 et 2, l'élément de garnissage 25 comprend un corps de support 37 délimitant un alésage 39 d'axe X-X' horizontal, une entretoise de renfort métallique 41 disposée dans l'alésage 39, une vis de fixation 43 prémontée sur le corps 37, et une bague 45 de blocage en position de la vis 43 dans l'alésage 39 avant montage de l'élément de garnissage 25 sur l'armature 13.

Comme représenté sur la Figure 1, l'élément de garnissage 25 comprend en outre, après sa fixation dans l'armature 13, un enjoliveur 46 fixé sur le corps de support 37.

Le corps 37 comprend une paroi verticale 47 d'appui intérieur sur l'élément porteur 23, une partie extérieure 49 de section transversale tronconique, qui fait saillie extérieurement par rapport à la paroi verticale 47, un manchon 51 de réception de l'entretoise 41 qui prolonge extérieurement la saillie 49, et une paroi de fixation 52 de l'enjoliveur 46, qui fait saillie intérieurement par rapport à la paroi verticale 47.

La paroi 47 comprend une région supérieure 53A en appui sur une face intérieure de la paroi 27 et une région inférieure 53B.

La région inférieure 53B est munie de bouterolles de fixation 55 engagées dans un orifice 56 ménagé dans la région verticale 31 de la paroi inférieure 29 du porteur 23. Les bouterolles 55 fixent le corps de poignée 25 sur l'élément porteur 23.

Comme illustré par la Figure 2, la partie tronconique 49 s'étend vers l'armature 13 le long de l'axe X-X'. Elle comprend une paroi latérale creuse 57 s'ouvrant intérieurement entre la région supérieure 53A et la région inférieure 53B de la paroi 47, et un fond 59 dans lequel débouche l'alésage 39.

Le fond 59 délimite un gradin intérieur 61 d'appui de la vis 43 et un gradin extérieur 63 d'appui de l'entretoise 41.

Le manchon 51 s'étend extérieurement le long de l'axe horizontal X-X' dans le prolongement du gradin extérieur 63. Il délimite intérieurement l'alésage 39. Après montage, le manchon 51 s'appuie sur l'armature 13, autour d'un orifice central de l'écrou de vissage 19 débouchant dans le fût 21.

En référence à la Figure 1, la paroi de fixation 52 de l'enjoliveur est de forme sensiblement complémentaire à la région de support 35. Elle s'appuie sur la région 35.

L'enjoliveur 46 est fixé par exemple par clippage sur le bord intérieur de la paroi de fixation 52. Il couvre le corps 37 et prend appui sur la paroi supérieure 27 du porteur 23.

L'entretoise 41 est réalisée à base d'un matériau métallique. Comme illustré par la Figure 2, elle comprend une partie tubulaire extérieure 65 d'axe X-X' et de section interne supérieure à la section externe de la tige filetée de la vis 43, et une collerette annulaire intérieure d'appui 67.

La partie tubulaire 65 est fixée contre le manchon 51 dans l'alésage 39. Elle présente une longueur sensiblement égale à celle du manchon 51. La surface interne de la partie tubulaire 65 est lisse.

La collerette 67 est disposée en appui sur le gradin extérieur 63. Elle affleure la surface intérieure du gradin intérieur 61, et délimite un logement annulaire 69 débouchant intérieurement autour de l'alésage 39.

La bague de blocage 45 est réalisée par exemple à base de caoutchouc. Elle comprend une partie tubulaire axiale 71 d'axe X-X' et une collerette d'appui 73 s'étendant radialement à l'extrémité intérieure de la partie 71.

La partie tubulaire 71 est disposée dans l'alésage 39 en appui entre la partie tubulaire 65 de l'entretoise 41 et la vis 43. Elle présente une longueur inférieure à celle de l'entretoise 41. Elle est calée axialement dans l'alésage 39 par l'intermédiaire de la collerette 73 disposée dans le logement annulaire 69.

Le procédé de montage de la porte 11 selon l'invention va maintenant être décrit. Initialement, le panneau de porte 15 est fourni avec l'élément de garnissage 25 comprenant une vis de montage 43 prémontée.

A cet effet, comme illustré par la Figure 2, l'extrémité extérieure de la vis 43 est calée dans l'alésage 39 par l'intermédiaire de la bague de blocage 45. Ce calage est assuré par compression locale de la partie tubulaire 71 de la bague 45 en caoutchouc entre l'extrémité extérieure de la vis 43 et la partie tubulaire 65 de l'entretoise 41. Par ailleurs, la tête de la vis 43 fait saillie à travers la partie tronconique 49, à l'écart du fond 59 de la partie tronconique 49.

Le panneau de porte 15 est alors disposé en regard de l'armature 13, de sorte que l'élément de garnissage 15 est placé en regard de l'écrou 19. Le manchon 51 est disposé en appui autour de l'orifice central de l'écrou 19 sur la face intérieure 17 de l'armature 13.

Ensuite, un tournevis (non représenté) est engagé dans la tête de la vis 43 depuis l'intérieur du véhicule. La vis 43 est alors entraînée en rotation autour de l'axe X-X' dans l'alésage 39. La bague de blocage 45 se déforme alors élastiquement pour libérer la vis 43 qui se déplace dans l'alésage 39 vers l'extérieur pour pénétrer dans le fût de vissage 21. Le vissage de l'élément de garnissage 25 dans l'armature 13 est alors effectué, jusqu'à ce que la tête de la vis s'appuie sur le fond 49, comme illustré par la Figure 1.

Grâce à l'invention qui vient d'être décrite, il est possible de disposer d'un élément de garnissage 25 portant une vis de fixation 43, laquelle est préassemblée sur l'élément 25 de manière simple, efficace, et à moindre coût, par l'intermédiaire d'un organe de blocage 45 déformable élastiquement.

L'élément de garnissage 25 selon l'invention est particulièrement efficace pour prémaintenir dans la vis 43 dans l'alésage 39, dans le cas où une entretoise de renfort métallique 41 est intercalée entre la vis 43 et un corps thermoplastique 37, notamment si le corps thermoplastique 37 est facilement déformable sous l'effet des forces de vissage, par exemple s'il est réalisé à base de SEBS (copolymères styrène-éthylène-butadiène).

## Revendications

1. Elément de garnissage (25), destiné à être monté sur une pièce (11) d'équipement de véhicule automobile, du type comprenant :
- un corps (37) thermoplastique délimitant au moins un alésage (39) de passage d'une vis de fixation (43) ; et
- des moyens de fixation (41, 43, 45, 49) du corps (37) sur la pièce (11), comprenant :
* une vis (43) de fixation engagée dans l'alésage (39), la vis (43) étant déplaçable dans l'alésage lors du montage de l'élément (25) sur la pièce (11) pour être vissée dans la pièce (11) ; et
* une entretoise (41) de renfort métallique fixée au corps (37) dans l'alésage (39) ;
**caractérisé en ce** les moyens de fixation (41, 43, 45, 49) comprennent au moins avant le montage, un organe (45) de blocage en position de la vis (43) par rapport au corps (37), interposé entre la vis (43) et l'entretoise de renfort (41), l'organe de blocage (45) étant déformable lors du montage pour libérer la vis (43) par rapport au corps (37).

2. Elément (25) selon la revendication 1, **caractérisé en ce que** l'organe de blocage (45) est une bague déformable.

3. Elément (25) selon la revendication 1 ou 2, **caractérisé en ce que** l'organe de blocage (45) comprend une partie axiale (71) s'étendant dans l'alésage (39) et une partie radiale (73) de retenue qui fait saillie hors de l'alésage (39).

4. Elément (25) selon la revendication 3, **caractérisé en ce que** l'entretoise (41) comprend une collerette d'appui (67) sur le corps thermoplastique (37), la partie radiale de retenue (73) s'appuyant sur la collerette d'appui (67).

5. Elément (25) selon l'une quelconque des revendications précédentes, **caractérisé en ce que** l'organe de blocage (45) est réalisé à base d'un matériau déformable élastiquement, l'organe de blocage (45) étant maintenu en compression entre la vis (43) et l'entretoise de renfort (41) au moins avant le montage.

6. Pièce (11) d'équipement de véhicule automobile, **caractérisée en ce qu'**elle comprend :
- une armature (13) ;
- un élément de garnissage (25) selon l'une quelconque des revendications précédentes, l'élément (25) étant vissé sur l'armature (13).

7. Procédé de montage d'une pièce (11) selon la revendication 6, **caractérisé en ce qu'**il comprend les étapes suivantes :
- amenée d'un élément de garnissage (25) selon l'une quelconque des revendications précédentes en regard d'une armature (13) de la pièce (11), l'organe de blocage (45) étant interposé entre la vis (43) et l'entretoise de renfort (41) pour bloquer en position la vis (43) par rapport au corps (37) ;
- déformation de l'organe de blocage (45) pour libérer la vis (43) ; et
- vissage de la vis (43) pour fixer l'élément de garnissage (25) sur l'armature (13).
